# EUROPEAN PATENT SPECIFICATION

(11) **EP 4 494 894 B1**
(45) Date of publication and mention of the grant of the patent: **13.05.2026**
(21) Application number: 24189270.2
(22) Date of filing: 17.07.2024
(51) Int. Cl.: B60B 1/00, B60B 1/02, B60B 21/10, B60B 21/02

(54) **BICYCLE RIM WITH PINCH FLAT RESISTANCE**
FAHRRADFELGE MIT EINKLEMMWIDERSTAND
JANTE DE VÉLO AVEC RÉSISTANCE AU PINCEMENT PLAT

(30) Priority: 19.07.2023 US 202363514524 P; 20.07.2023 US 202363514720 P
(43) Date of publication of application: 22.01.2025
(60) Divisional application: 26168253.8
(73) Proprietor: Specialized Bicycle Components, Inc., Morgan Hill, CA 95037 (US)
(72) Inventor: Teixeira IV, Charles, Morgan Hill 95037 (US); Meyer, Jeffrey, Morgan Hill 95037 (US)
(74) Representative: Forresters IP LLP

(56) References cited:
- NL-B1- 2 019 113
- US-A1- 2011 018 336
- US-A1- 2018 361 785
- US-A1- 2021 129 581

## Description

### FIELD

The present disclosure relates to a bicycle comprising a wheel and particularly to a bicycle wheel rim designed to resist pinch flats.

### BACKGROUND

Bicycle wheels commonly include a rim, a tire supported on the rim, and an inner tube positioned between the rim and the tire. The inner tube is adapted to be filled with pressurized air to a desired pressure to thereby inflate the tire. Some bicycle wheels are design to be used without a tube (i.e., "tubeless"), in which case the space between the tire and rim is adapted to be filled with air to inflate the tire.

Pinch flats, also known as snake bites, occur when the inner tube (or tire in the case of a tubeless wheel) of a bicycle wheel is pinched between the rim and an external object, such as a curb or pothole. This results in punctures and can lead to costly repairs and inconvenience. Various solutions have been proposed in the prior art to address this issue, including thicker inner tubes, tire liners, and tire inserts. However, these solutions often add weight, complexity, and compromise the overall performance of the bicycle.

US 2018/361785 discloses a bicycle rim with enlarged outer radial edges. US 2011/018336 discloses an interface fitting for a cycle wheel. US 2021/129581 discloses a rim assembly for a bicycle wheel. NL 2019113 discloses a bicycle wheel rim for a tubeless wheel.

### BRIEF DESCRIPTION OF THE DRAWINGS

FIG. 1 is a perspective view of a bicycle according to an embodiment, including a wheel rim.
FIG. 2 is a perspective view of a rim of the bicycle of FIG. 1.
FIG. 3 is a cross-sectional view of the rim of FIG. 2, taken along section line 3-3 of FIG. 2.
FIG. 4 is a perspective view of a rim of the bicycle of FIG. 1 according to another embodiment.
FIG. 5 is a cross-sectional view of the rim of FIG. 4, taken along section line 5-5 of FIG. 4.

### DETAILED DESCRIPTION

According to the invention, a bicycle includes a wheel supporting a frame of the bicycle. The wheel includes a rim configured to support a tire. The rim includes a main body, a first flange (e.g., a substantially solid left flange) extending substantially radially from the main body, and a second flange (e.g., a substantially solid right flange) extending substantially radially from the main body, the first and second flanges to cooperatively support the tire. The first flange has a first flange width (e.g., about 5mm) and the second flange has a second flange width (e.g., about 5mm). The first flange and the second flange are spaced from each other by a flange spacing (e.g., about 30mm). A ratio of the first flange width to the flange spacing is at least 0.14 (alternatively, at least 0.15, at least 0.16, or about 0.167). The first flange may include an inner side surface, a radial edge surface, and a radiused inner corner having an inner corner radius and connecting the inner side surface to the radial edge surface. A ratio of the inner corner radius to the first flange width is preferably at most 0.5 (alternatively, at most 0.4 or at most 0.3).

According to another exemplary embodiment, a bicycle includes a wheel supporting a frame of the bicycle. The wheel includes a rim configured to support a tire. The rim includes a main body defining first and second bead seats, a first flange extending substantially radially from the main body, and a second flange extending substantially radially from the main body, the first and second flanges to cooperatively support the tire. The first flange has a first flange width (e.g., about 5mm) and a first flange height (e.g., about 5.5mm) from the first bead seat, and the second flange has a second flange width (e.g., about 5mm) and a second flange height (e.g., about 5.5mm) from the second bead seat. According to the invention, a ratio of the first flange width to the first flange height is at least 0.75 (alternatively at least 0.80, at least 0.85, or at least 0.90).

According to another exemplary embodiment, a bicycle includes a wheel supporting the frame of the bicycle. The wheel includes a rim configured to support a tire. The rim includes a main body having one or more inner cavities that define one or more radial cavity projections, a first flange extending substantially radially from the main body, and a second flange extending substantially radially from the main body, the first and second flanges adapted to cooperatively support the tire. The first flange defines a radial first flange projection and the second flange defines a second radial flange projection. In this embodiment, all of the one or more radial cavity projections do not intersect the radial first flange projection and the second radial flange projection. Instead, the radial cavity projections may be spaced from the radial first flange projection by a gap that is at least 10% (alternatively, at least 20%, at least 30%, or at least 40%) of a first flange width of the first flange. The radial cavity projections may also be spaced from the radial second flange projection by a gap that is at least 10% (alternatively, at least 20%, at least 30%, or at least 40%) of a second flange width of the second flange.

In yet another embodiment, the main body includes a nose section, a first sidewall connecting the nose section to the first flange, and a second sidewall connecting the nose section to the second flange, wherein the first sidewall includes a first concave outer surface that does not intersect the radial first flange projection. Similarly, the second sidewall may have a second concave outer surface that does not intersect the radial second flange projection. Either or both of the first concave outer surface and the second concave outer surface may have a radius of at most 20mm (alternatively, at most 15mm, at most 10mm, about 6mm).

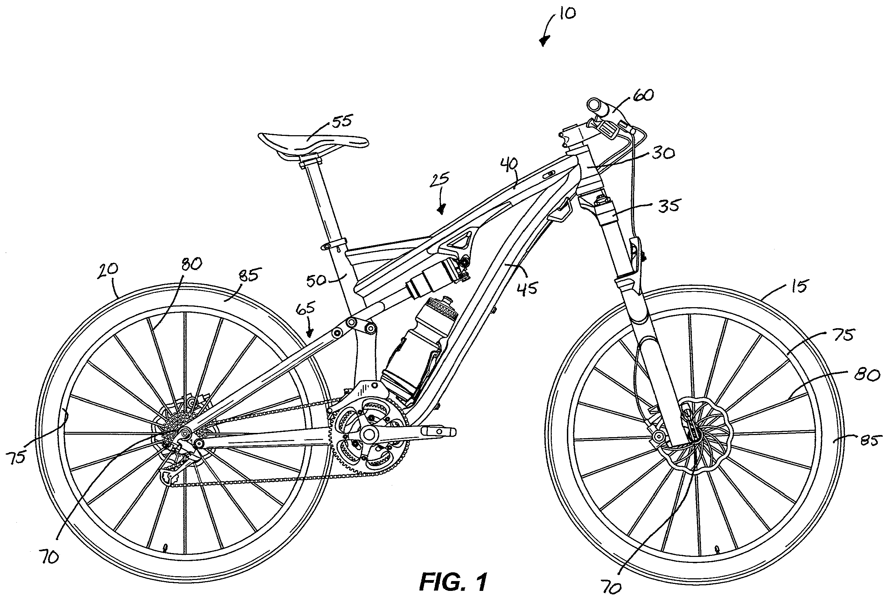

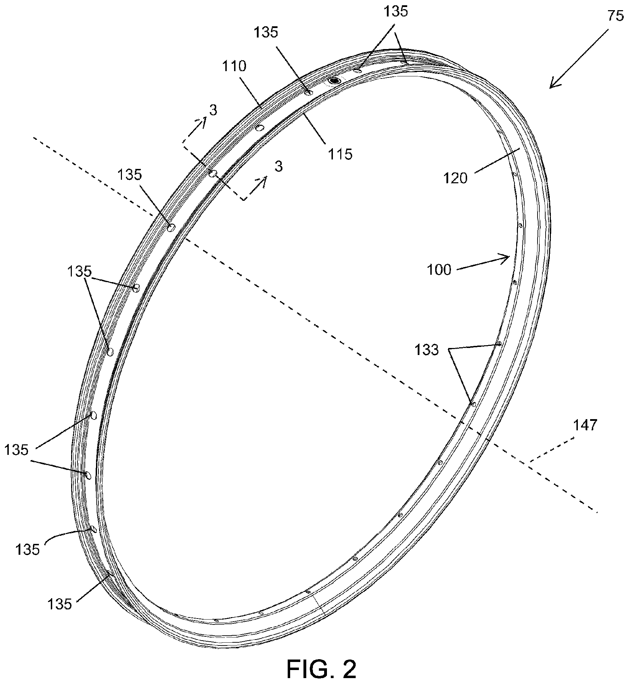

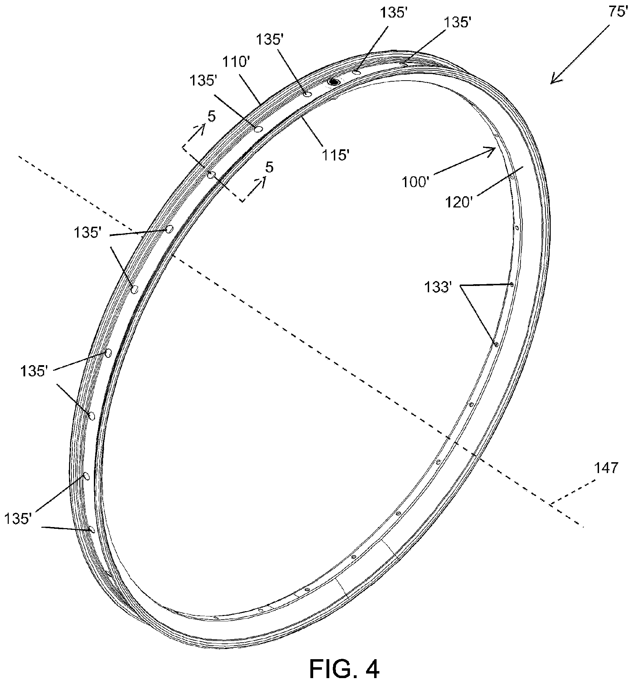

Fig. 1 shows a bicycle 10 that includes a front wheel 15, a rear wheel 20, and a frame 25. The frame 25 may be supported by the front wheel 15 and the rear wheel 20. Further, the frame 25 may include, for example, a head tube 30, a front fork 35 rotationally supported by the head tube 30, a top tube 40 connected to and extending rearward from the head tube 30, and/or a down tube 45 connected to the head tube 30 below the top tube 40 and extending rearward from the head tube 30. For example, the down tube 45 may extend generally downward from the head tube 30 and toward a bottom bracket of the frame 25. The bottom bracket of the frame 25 may receive a crankset of a drivetrain of the bicycle 10, which at least partially conceals the bottom bracket from view as illustrated in FIG. 1. A seat tube 50 may extend upward from the bottom bracket and be connected to the top tube 40. The seat tube 50 may support a seat 55 and/or a seat post supporting the seat 55. The bicycle 10 may also include a handlebar 60 for turning the front wheel 15 via the front fork 35, and/or a rear frame triangle 65 that supports the rear wheel 20. In the illustrated example, each wheel 15, 20 includes a hub 70, a rim 75 supported by the hub 70 via spokes 80 (or other reinforcement members), and a tire 85 that is supported by and/or attached to the rim 75. The tire 85 may be defined by a tubular casing having a tread portion and sidewalls that terminate at tire beads disposed on edges of the casing. For reference, each wheel 15, 20 may include, for example, a central plane intersecting the hub 70 and the rim 75 and perpendicular to a rotational axis 147 of such wheel 15, 20 (FIGS. 2 and 4). Further, each wheel 15, 20 may be symmetrical or partially (e.g., substantially) symmetrical about its central plane. For example, where the wheel 15 or 20 is partially symmetrical about its central plane, portions of the wheel 15 or 20 (e.g., first flange 110 and second flange 115, outer side surface 110c and outer side surface 115c) may be symmetrical though other portions of the wheel 15 or 20 (e.g., first sidewall 125 and second sidewall 130) are not. Further, where the wheel 15 or 20 is substantially symmetrical, the wheel 15 or 20 may be at least partially symmetrical and values of the mass of the wheel 15 or 20 on each side of the central plane may differ by not more than 2 percent, 5 percent, 10 percent, or 20 percent.

In many embodiments, the front wheel 15 and the rear wheel 20 and their constituent parts (e.g., hub 70, rim 75, spokes 80, and tire 85) may be similar or identical to each other, and for convenience of discussion, the front wheel 15 and the rear wheel 20 and their constituent parts (e.g., hub 70, rim 75, spokes 80, and tire 85) are generally described in this manner herein. However, in other embodiments, at least part of the rear wheel 20 and/or its constituent parts (e.g., hub 70, rim 75, spokes 80, and tire 85) may differ from at least part of the front wheel 15 and/or its constituent parts (e.g., hub 70, rim 75, spokes 80, and tire 85), and vice versa. For example, in some embodiments, a diameter of the front wheel 15 may be larger than a diameter of the rear wheel 20, and vice versa. In further embodiments, a cross-sectional geometry of the rim 75 of the rear wheel 20 may be different than a cross-sectional geometry of the rim 75 of the front wheel 75, and vice versa. Still, other parts of the front wheel 15 and rear wheel 20 and their constituent parts (e.g., hub 70, rim 75, spokes 80, and tire 85) may remain similar or identical to each other.

Moving on, the rim 75 of its wheel 15, 20 is annular, and may be formed of metallic (e.g., aluminum), composite (e.g., carbon fiber), or other appropriate material. With reference to FIGS. 2-3, in the illustrated example the rim 75 includes a first (e.g., radially outer) end 90a, a second (e.g., radially inner) end 90b opposite the first end 90a, and a longitudinal axis 95 extending through the first and second end 90a, 90b. The longitudinal axis 95 may be parallel to and/or coincident with the central plain of its wheel (e.g., front wheel 15 or rear wheel 20). Further, the rim 75 includes a main body 100 defining left and right bead seats 105 to engage tire beads of the tire 85, a first flange 110, and a second flange 115. The main body 100 further includes a tire well wall 107 extending between the first flange 110 and the second flange 115, which may include the left and right bead seats 105. Part of the tire well wall (e.g., a center of the tire well wall 107) may be recessed (e.g., closer to the second end 90b) from another part of the tire well wall 107. Further, the first flange 110 and the second flange 115 extend substantially radially from the main body 100 to support the tire 85.

With further reference to FIGS. 2-3, the main body 100 may include an inner cavity 140 defined at least partially by a nose section 120, a first sidewall 125 extending away from the nose section 120 and connecting the nose section 120 to the first flange 110, and a second sidewall 130 extending away from the nose section 120 and connecting the nose section 120 to the second flange 115. The nose section 120 may be proximate to the second end 90b. Further, the inner cavity 140 may be at least partially defined by the tire well wall of the main body 100. The main body 100 may further include one or more spoke holes 133 and nipple access holes 135 (FIG. 2), thereby facilitating the insertion of spoke nipples into an inner cavity 140 of the main body. The spoke hole(s) 133 may be formed in the nose section 120, and/or the nipple access hole(s) 135 (FIG. 2) may be formed in the tire well wall.

For reference, a first side edge of the inner cavity 140 defines a first radial cavity plane 145a and a second side edge of the inner cavity 140, which is opposite the first side edge, defines a second radial cavity plane 145b. The first radial cavity plane 145a extends substantially radially and proximally adjacent to the first flange 110 and the second radial cavity plane 145b extends substantially radially and proximally adjacent to the second flange 115. Further, the planes 145a,145b are oriented parallel to each other and perpendicular to a rotational axis 147 of its wheel 15, 20. A volume of space between the first radial cavity plane 145a and the second radial cavity plane 145b is a radial cavity projection (i.e., a radial projection of the cavity). In embodiments having more than one inner cavity, multiple corresponding radial cavity projections may be defined, one for each cavity.

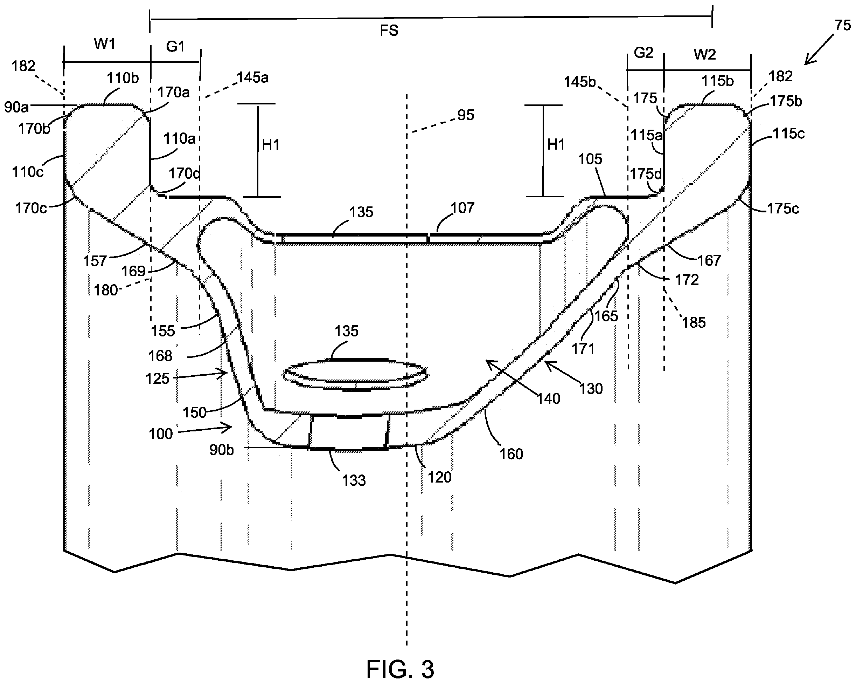

With continued reference to FIG. 3, in the illustrated example the first sidewall 125 smoothly transitions from the nose section 120 and may include a first outer surface section 150, a second outer surface section 155, and a third outer surface section 157. For example, in some embodiments, the first outer surface section 150 can comprise a convex surface transitioning from the nose section 120 to the second outer surface section 155, the second outer surface section 155 can comprise a concave surface transitioning from the first outer surface section 150 to the third outer surface section 157, and the third outer surface section 157 can comprise a convex surface transitioning from the second outer surface section 155 to an outer side surface 110c of the first flange 110. Further, the first sidewall 125 can comprise a lower transition 168 where the first outer surface section 150 transitions to the second outer surface section 155, and an upper transition 169 where the second outer surface section 155 transitions to the third outer surface section 157. In these embodiments, a slope of a surface of the first sidewall 125 can progress constantly or increasingly vertically toward the first flange 110 at the first outer surface section 150. The second outer surface section 155 can begin at the lower transition 168 where the slope begins to progress decreasingly vertically toward the first flange 110. Then, the slope can progress constantly or decreasingly vertically away from the first flange 110 through the second outer surface section 155. The third outer surface section 157 can begin at the upper transition 169 where the slope begins to progress (again) increasingly vertically toward the first flange 110. Then, the slope can progress constantly or increasingly vertically toward the first flange 110 through the third outer surface section 157 until reaching the outer side surface 110c of the first flange 110. Similarly, the second sidewall 130 smoothly transitions from the nose section 120 and may include a first outer surface section 160, a second outer surface section 165, and a third outer surface section 167. For example, in some embodiments, the first outer surface section 160 can comprise a convex surface transitioning from the nose section 120 to the second outer surface section 165, the second outer surface section 165 can comprise a concave surface transitioning from the first outer surface section 160 to the third outer surface section 167, and the third outer surface section 167 can comprise a convex surface transitioning from the second outer surface section 167 to an outer side surface 115c of the second flange 115. Further, the second sidewall 130 can comprise a lower transition 171 where the first outer surface section 160 transitions to the second outer surface section 165, and an upper transition 172 where the second outer surface section 165 transitions to the third outer surface section 167. In these embodiments, a slope of a surface of the second sidewall 130 can progress constantly or increasingly vertically toward the second flange 115 at the first outer surface section 160. The second outer surface section 165 can begin at the lower transition 171 where the slope begins to progress decreasingly vertically toward the second flange 115. Then, the slope can progress constantly or decreasingly vertically away from the second flange 115 through the second outer surface section 165. The third outer surface section 167 can begin at the upper transition 172 where the slope begins to progress (again) increasingly vertically toward the second flange 115. Then, the slope can progress constantly or increasingly vertically toward the second flange 115 through the third outer surface section 167 until reaching the outer side surface 115c of the second flange 115. In some embodiments, slopes of the third outer surface sections 157,167 may form an angle of about 50-65 degrees (alternatively, 55-60 degrees) from the vertical longitudinal axis 95 over a majority of the third outer surface sections 157, 167. As a result of the slope angle and length of the third outer surface sections 157, 167 in the illustrated embodiment, all or a substantial portion of the first outer surface sections 150, 160 are positioned between a radial projection of the first flange 110 and a radial projection of the second flange. That is, the entirety of the first outer surface section 150 may be laterally inboard of (i.e., toward the axis 95) and does not intersect the radial projection of the first flange 110, and the entirety of the first outer surface section 160 may be laterally inboard of and does not intersect the radial projection of the second flange 115. Implementing concave surfaces for the second outer surface sections can facilitate a steep taper of sidewalls 125,130 of the main body 100 below the flanges 110,115, which decouples tuning of the main body stiffness from the geometry of the tire interface of the rim 75 and results in flanges that are essentially cantilevered from the main body 100.

In the example illustrated in Fig. 3, the first outer surface section 150 includes a radius of approximately 50mm, the first outer surface section 160 includes a radius of approximately 60mm, and the second outer surface sections 155, 165 include radii of approximately 6mm. In some examples, the first outer surface section 150 may include a radius within the range of 50mm to 100mm and in other examples the first outer surface section 150 may include a radius in the range of 60mm to 80mm. Similarly, in some examples, the first outer surface section 160 may include similar alternative values. In some examples, the second outer surface 155 may include a radius within the range of 2mm to 10mm and in other examples the second outer surface 155 may include a radius within the range of 4mm to 8mm. Similarly, in some examples, the second outer surface 165 may include similar alternative values.

With continued reference to FIG.3, the first outer surface sections 150, 160 may result in the inner cavity 140 being tapered toward the nose section 120. That is, the width of the first end 90a of the rim 75 (e.g., adjacent the first and second flanges 110, 115) may be substantially greater than the width of the second end 90b of the rim 75 (e.g., adjacent the nose section 120).

With reference to FIGS. 2-3, the first and second flanges 110, 115 may be substantially solid. For example, the first and second flanges 110, 115 may be devoid of an internal cavity. In other embodiments, the first flange 110 and/or the second flange 115 may be at least partially hollow. In the illustrated example, the first flange 110 is positioned to one side (e.g., the left) of the longitudinal axis 95 and the second flange 115 is positioned to an opposite side (e.g., the right) of the longitudinal axis 95. However, in some examples, flanges may be arranged differently (e.g., the first flange 110 may be positioned to the right of the longitudinal axis 95 and the second flange 115 may be positioned to the left of the longitudinal axis 95).

With reference to FIG. 3, the first flange 110 may include an inner side surface 110a, a radial edge surface 110b, and an outer side surface 110c. The second flange 115 may similarly include an inner side surface 115a, a radial edge surface 115b, and an outer side surface 115c. The inner side surfaces 110a, 115a may be oriented substantially parallel to the outer side surfaces 110c, 115c, and the radial edge surfaces 110b, 115b may be oriented substantially perpendicular to the inner side surfaces 110a, 115a and the outer side surfaces 110c, 115c. The radial edge surface 110b of the first flange 110 may extend along the same plane (i.e., be parallel to and/or coplanar with) the radial edge surface 115b of the second flange 115. In other examples, the inner side surfaces 110a, 115a may not extend parallel to one another, and/or radial edge surfaces 110b, 115b may not extend perpendicular to the inner side surfaces 110a, 115a, and/or the radial edge surface 110b may not extend along a same plane as the radial edge surface 115b.

With continued reference to FIG. 3, the first flange 110 may include a radiused inner upper corner 170a, and the second flange 115 may include a radiused inner upper corner 175a. The upper corners 170a, 175a may have inner upper corner radii connecting the inner side surfaces 110a, 115a to the radial edge surfaces 110b, 115b. The first flange 110 also may include a radiused outer upper corner 170b, and the second flange 115 may include a radiused outer upper corner 175b. The upper corners 170b, 175b have outer upper corner radii connecting the outer side surfaces 110c, 115c to the radial edge surfaces 110b, 115b. In the illustrated example, the first flange 110 and the second flange 115 both include an inner upper corner radius and an outer upper corner radius of approximately 1.5mm. However, in other examples, the inner upper corner radiuses and/or the outer upper corner radiuses may include different values, as discussed in more detail below.

With continued reference to FIG. 3, the first flange 110 may include a radiused outer lower corner 170c, and the second flange 115 may include a radiused outer lower corner 175c. The outer lower corners 170c, 175c may have outer lower corner radii connecting the outer side surfaces 110c, 115c to the first and second sidewalls 125, 130, respectively. The first flange 110 also may include a radiused inner lower corner 170d, and the second flange 115 may include a radiused inner lower corner 175d. The inner lower corners 170d, 175d may have inner lower corner radii connecting the inner side surfaces 110a, 115a to the bead seats 105, respectively. In the illustrated example, the outer lower corner radii are each 3mm and the inner lower corner radii are each 1mm. However, in other embodiments, the outer lower corner radiuses and/or the inner lower corner radiuses may include different values.

With continued reference to FIG 3, the first flange 110 may include a first width W1, and the second flange 115 may include a second width W2. The first and second widths W1, W2 may be defined as the widest distance (parallel to the rotational axis 147) between the inner side surface 110a, 115a and the outer side surface 110c, 115c of the first and second flange 110, 115, respectively. In the illustrated example, the first width W1 and the second width W2 remain substantially constant along the first and second flanges 110, 115. That is, the first flange 110 and second flange 115 are not tapered along the length of the flanges 110, 115. Additionally, as seen in FIG. 3, the widths W1, W2 of the flanges 110, 115 may each be substantially greater than a width of either of the first and second sidewalls 125, 130. In other examples, the width W1 and/or the width W2 may change (e.g., the first flange 110 and/or the second flange 115 may taper in width, at least to some degree).

In the illustrated example, the first width W1 is approximately 5mm and the second width W2 is approximately 5mm. However, in other examples, the first flange 110 and/or the second flange 115 may include different widths, and/or the first width W1 may be different from the second width W2. In some examples, the ratio of the inner upper corner radius of the first flange 110 to the first width W1, and the ratio of the inner upper corner radius of the second flange 115 to the second width W2, may be about 0.3. With continued reference to FIG. 3, the ratio of the outer upper corner radius of the first flange 110 to the first width W1, and the ratio of the outer upper corner radius of the second flange 115 to the second width W2, may be about 0.3.

With continued reference to FIG. 3, the first flange 110 may include a first height H1, and the second flange 115 may include a second height H2. The first and second heights H1, H2 are defined as a maximum distance (perpendicular to the rotational axis 147) between the bead seats 105 and the radial edge surface 110b, 115b of the first and second flange 110, 115, respectively. In the illustrated example, the first height H1 is approximately 5.5mm and the second height H2 is approximately 5.5mm. However, in other examples, the first flange 110 and/or the second flange 115 may include different heights, and/or the first height H1 may be different from the second height H2. In some examples, the ratio of the first width W1 to the first height H1, and the second width W2 to the second height H2, is approximately 0.91.

With continued reference to FIG. 3, in the illustrated example the first flange 110 and the second flange 115 are spaced apart from each other by a flange spacing FS. Specifically, the flange spacing FS is defined as a maximum distance (parallel to the rotational axis 147) between the inner side surface 110a of the first flange 110 and the inner side surface 115a of the second flange 115. In some examples, the flange spacing FS is approximately 30mm. In other examples, the flange spacing FS may include a different value. In some examples, the ratio of the first width W1 to the flange spacing FS is approximately 0.167.

With continued reference to FIG. 3, the first flange 110 may define a first inner flange plane 180 and a first outer flange plane 182, and the second flange 115 may define a second inner flange plane 185 and a second outer flange plane 187. The first inner flange plane 180 and second inner flange plane 185 are defined as planes that are perpendicular to the rotational axis 147 (i.e., radial) and pass through innermost surfaces of the first flange 110 and second flange 115, respectively. The first outer flange plane 182 and second outer flange plane 187 are defined as planes that are perpendicular to the rotational axis 147 (i.e., radial) and pass through outermost surfaces of the first flange 110 and second flange 115, respectively. In the illustrated example, the first inner flange plane 180 is substantially defined by the inner side surface 110a of the first flange 110, the first outer flange plane 182 is substantially defined by the outer side surface 110c of the first flange 110, the second inner flange plane 185 is substantially defined by the inner side surface 115a of the second flange 115, and the second outer flange plane 187 is substantially defined by the outer side surface 115a of the second flange 115.

The volume of space between first inner flange plane 180 and a first outer flange plane 182 is defined as a first radial flange projection, and the volume of space between the second inner flange plane 185 and a second outer flange plane 187 is defined as a second radial flange projection. In the illustrated example, the radial flange projections do not intersect (i.e., do not overlap) the radial cavity projection. In embodiments with multiple radial cavity projections, the radial flange projections may not intersect (i.e., do not overlap) all of the radial cavity projections. The illustrated radial cavity projection is spaced from the first radial flange projection by a first gap G1, and the second radial cavity projection is spaced from the second radial flange projection by a second gap G2. In the example illustrated in FIG. 3, the first gap G1 is about 2.8mm and the second gap G2 is about 2.1mm. In other examples, the first and second radial flange projections are not spaced from the radial cavity projection. In the example illustrated in FIG. 3, the first gap G1 includes a width that is at least 10% of the first width W1 and the second gap G2 includes a width that is at least 10% of the second width W2.

The width W1, W2 of the flanges 110, 115, in combination with the structure of the radial edge surfaces 110b, 115b of the flanges 110, 115, is believed to dampen impact and reduce the likelihood of "pinch" flats if the tire 85 contacts a large, hard object, such as a rock or curb. More specifically, because the radial edge surfaces 110b, 115b of the flanges 110, 115 are substantially flat and include a large width, it is believed the impact of a hard object (e.g., curb, rock, etc.) onto the rim 75 is dispersed over a larger area than on traditional rim flanges, thereby decreasing localized load on the tire. By providing the wide, flat radial edge surfaces 110b, 115b on the flanges 110, 115, as opposed to a curved or rounded radial edge surface, it is believed force is more evenly dispersed over the flanges 110, 115 in the event of an impact. Furthermore, by providing solid flanges 110, 115 with a substantial width W1, W2 (a width of approximately 5mm) and providing flanges 110, 115 with a high width to height ratio (e.g., a width to height ratio of approximately 0.75 - 0.91), it is believed force is dispersed over a larger surface in the event of an impact.

FIGS. 4-5 illustrate another embodiment of a rim 75' that is similar to the rim 75 described above in connection with Figs. 2-3. Similar features are identified with similar reference numbers appended with a prime symbol. Reference is hereby made to the description of the rim 75 shown in FIGS. 1-3 for description of the features and elements of the rim 75' not specifically included below.

The rim 75' of FIGS. 4-5 includes a main body 100' defining a bead seat 105' to engage the tire bead, a first flange 110' extending substantially radially from the main body 100', and a second flange 115' extending substantially radially from the main body 100', the first and second flanges 110',115' cooperatively supporting the tire 85'. The main body 100' may include an inner cavity 140' defined at least partially by a nose section 120', a first sidewall 125' connecting the nose section 120' to the first flange 110', and/or a second sidewall 130' connecting the nose section 120' to the second flange 115'. The main body 100' may include one or more spoke holes 133' and nipple access holes 135' (FIG. 4), thereby facilitating the insertion of spoke nipples into the inner cavity 140'.

In some examples, a first side edge of the inner cavity 140' defines a first radial cavity plane 145a', and a second side edge of the inner cavity 140', which is opposite the first side edge, defines a second radial cavity plane 145b'. The first radial cavity plane 145a' extends adjacent to the first flange 110' and the second radial cavity plane 145b' extends adjacent to the second flange 115'. The first radial cavity plane 145a' and second radial cavity plane 145b' are oriented parallel to each other and perpendicular to the rotational axis 147' of the wheel. The volume of space between the first radial cavity plane 145a' and the second radial cavity plane 145b' is a radial cavity projection.

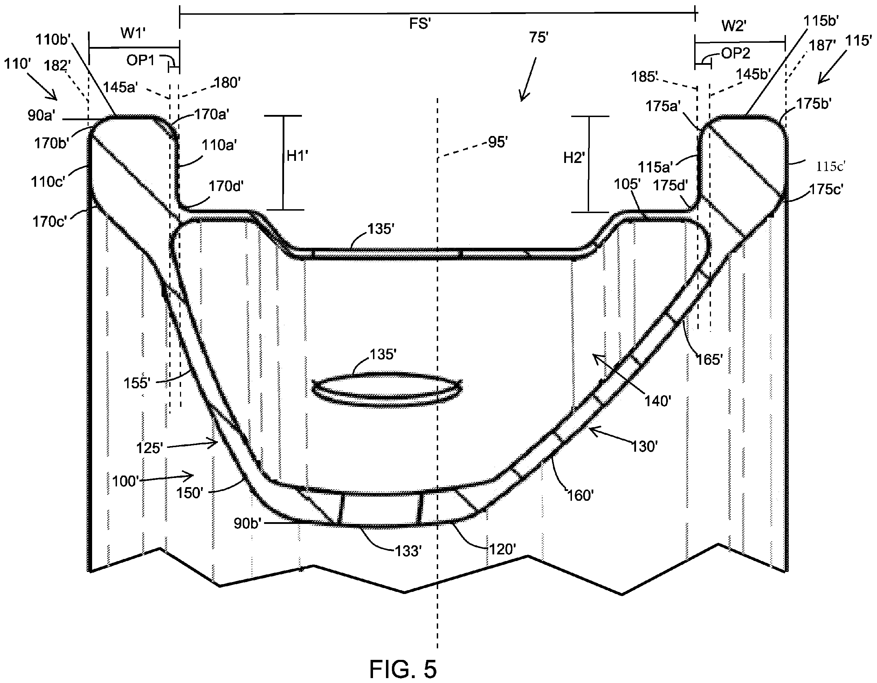

With reference to FIG. 5, the first flange 110' may define a first inner flange plane 180' and a first outer flange plane 182', and the second flange 115' may define a second inner flange plane 185' and a second outer flange plane 187'. As generally discussed above in connection with the first embodiment of Figs. 2-3, these planes 180', 182', 185', 187' are perpendicular to the rotational axis 147 (i.e., radial). The plane 180' may be defined by an inner side surface 110a' of the first flange 110' and the plane 182' may be defined by an outer side surface 110c' of the first flange 110'. The plane 185' may be defined by an inner side surface 115a' of the second flange 115' and the plane 187' may be defined by an outer side surface 115c' of the second flange 115'. The volume of space between first inner flange plane 180' and a first outer flange plane 182' is defined as a first radial flange projection, and the volume of space between the second inner flange plane 185' and a second outer flange plane 187' is defined as a second radial flange projection.

In the embodiment of FIG. 5, the radial flange projections each overlap a portion of the radial cavity projection. In other words, a portion of the radial cavity projection overlaps with a portion of the flanges 110', 115'. The radial cavity projection overlaps with the radial first flange plane 180' by a first overlapping portion OP1, and the radial cavity projection overlaps with the radial second flange plane 185' by a second overlapping portion OP2. In the illustrated example, the first overlapping portion OP1 includes a width of about 0.2mm and the second overlapping portion OP2 includes a width of about 0.3mm. However, in some examples, the first overlapping portion OP1 may include a width greater than a width of the second overlapping portion OP2, or the first and second overlapping portions OP1, OP2 may have the same width. Further, in some examples, the rim 75' may only have one of the overlapping portions OP1, OP2, and may also include a gap between one of the radial flange projections and the radial cavity projection.
The scope of the invention is defined by the following claims.

## Claims

1. A bicycle comprising:
a wheel (15, 20) supporting a frame (25) of the bicycle (10), the wheel (15, 20) comprising a rim (75, 75') configured to support a tire (85),
wherein the rim (75, 75') includes:
a main body (100, 100') defining a bead seat (105, 105'); and
a first flange (110, 110') and a second flange (115, 115'), the first flange (110, 110') and the second flange (115, 115') extending substantially radially from the main body (100, 100') to support the tire (85) on opposite sides of a longitudinal axis (95, 95'), wherein the first flange (110, 110') has a first flange width (W1, W1') extending perpendicular to the longitudinal axis (95, 95') and a first flange height (H1, H1') extending from the bead seat (105, 105') and parallel to the longitudinal axis (95, 95'), wherein the second flange (115, 115') has a second flange width (W2, W2'), wherein a ratio of the first flange width (W1, W1') to the first flange height (H1, H1') is at least 0.75, wherein the first flange (110, 110') and the second flange (115, 115') are spaced from each other by a flange spacing (FS), and wherein a ratio of the first flange width (W1, W1') to the flange spacing (FS) is at least 0.14.

2. A bicycle as claimed in claim 1, wherein the first flange (110, 110') is one of a left flange or a right flange and the second flange (115, 115') is another of the left flange or the right flange.

3. A bicycle as claimed in claim 1 or claim 2, wherein the first flange (110, 110') is substantially solid.

4. A bicycle as claimed in any of the preceding claims, wherein the ratio of the first flange width (W1, W1') to the flange spacing (FS) is at least 0.15.

5. A bicycle as claimed in any of the preceding claims, wherein the ratio of the first flange width (W1, W1') to the flange spacing (FS) is at least 0.16.

6. A bicycle as claimed in any of the preceding claims, wherein the first flange width (W1, W1') is about 5mm and the flange spacing (FS) is about 30mm.

7. A bicycle as claimed in any of the preceding claims, wherein the first flange (110, 110') includes an inner side surface (110a, 110a'), a radial edge surface (115b, 115b'), and a radiused inner corner having an inner corner radius and connecting the inner side surface (110a, 110a') to the radial edge surface(115b, 115b'), wherein a ratio of the inner corner radius to the first flange width (W1, W1') is at most 0.5.

8. A bicycle as claimed in claim 7, wherein the ratio of the inner corner radius to the first flange width (W1, W1') is at most 0.4.

9. A bicycle as claimed in any of the preceding claims, wherein the ratio of the first flange width (W1, W1') to the first flange height (H1, H1') is at least 0.80.

10. A bicycle as claimed in any of the preceding claims, wherein the ratio of the first flange width (W1, W1') to the first flange height (H1, H1') is at least 0.85.

11. A bicycle as claimed in any of the preceding claims, wherein the ratio of the first flange width (W1, W1') to the first flange height (H1, H1') is about 0.91.

12. A bicycle as claimed in any of the preceding claims, wherein the first flange width (W1, W1') is about 5mm and the first flange height (H1, H1') is about 5.5mm.

13. A bicycle as claimed in any of the preceding claims, wherein the main body defines a radial cavity projection.

14. A bicycle as claimed in claim 13, wherein the first flange (110) defines a radial first flange projection and the second flange (115) defines a second radial flange projection, wherein the radial cavity projection does not intersect the radial first flange projection and the second radial flange projection, wherein the first radial flange projection is spaced from the radial cavity projection by a first gap (G1) and the second radial flange projection is spaced from the radial cavity projection by a second gap (G2), wherein the first gap (G1) includes a width that is at least 10% of the first flange width (W1) and the second gap G2 includes a width that is at least 10% of the second flange width (W2).

## Patentansprüche

1. Fahrrad, umfassend:
ein Rad (15, 20), das einen Rahmen (25) des Fahrrads (10) trägt, das Rad (15, 20) umfassend eine Felge (75, 75'), die konfiguriert ist, um einen Reifen (85) zu tragen,
wobei die Felge (75, 75') einschließt:
einen Hauptkörper (100, 100'), der einen Wulstsitz (105, 105') definiert; und
einen ersten Flansch (110, 110') und einen zweiten Flansch (115, 115'), wobei sich der erste Flansch (110, 110') und der zweite Flansch (115, 115') im Wesentlichen radial von dem Hauptkörper (100, 100') erstrecken, um den Reifen (85) auf gegenüberliegenden Seiten einer Längsachse (95, 95') zu tragen, wobei der erste Flansch (110, 110') eine erste Flanschbreite (W1, W1'), die sich senkrecht zu der Längsachse (95, 95') erstreckt, und eine erste Flanschhöhe (H1, H1'), die sich von dem Wulstsitz (105, 105') erstreckt und parallel zu der Längsachse (95, 95') verläuft, aufweist, wobei der zweite Flansch (115, 115') eine zweite Flanschbreite (W2, W2') aufweist, wobei ein Verhältnis der ersten Flanschbreite (W1, W1') zu der ersten Flanschhöhe (H1, H1') mindestens 0,75 beträgt, wobei der erste Flansch (110, 110') und der zweite Flansch (115, 115') durch einen Flanschabstand (FS) voneinander beabstandet sind, und wobei ein Verhältnis der ersten Flanschbreite (W1, W1') zu dem Flanschabstand (FS) mindestens 0,14 beträgt.

2. Fahrrad nach Anspruch 1, wobei der erste Flansch (110, 110') einer von einem linken Flansch oder einem rechten Flansch ist und der zweite Flansch (115, 115') ein anderer von dem linken Flansch oder dem rechten Flansch ist.

3. Fahrrad nach Anspruch 1 oder 2, wobei der erste Flansch (110, 110') im Wesentlichen massiv ist.

4. Fahrrad nach einem der vorstehenden Ansprüche, wobei das Verhältnis der ersten Flanschbreite (W1, W1') zu dem Flanschabstand (FS) mindestens 0,15 beträgt.

5. Fahrrad nach einem der vorstehenden Ansprüche, wobei das Verhältnis der ersten Flanschbreite (W1, W1') zu dem Flanschabstand (FS) mindestens 0,16 beträgt.

6. Fahrrad nach einem der vorstehenden Ansprüche, wobei die erste Flanschbreite (W1, W1') etwa 5 mm beträgt und der Flanschabstand (FS) etwa 30 mm beträgt.

7. Fahrrad nach einem der vorstehenden Ansprüche, wobei der erste Flansch (110, 110') eine Innenseitenoberfläche (110a, 110a'), eine radiale Kantenoberfläche (115b, 115b') und eine gerundete Innenecke, die einen Inneneckenradius aufweist und die Innenseitenoberfläche (110a, 110a') mit der radialen Kantenoberfläche (115b, 115b') verbindet, einschließt, wobei ein Verhältnis des Inneneckenradius zu der ersten Flanschbreite (W1, W1') höchstens 0,5 beträgt.

8. Fahrrad nach Anspruch 7, wobei das Verhältnis des Inneneckenradius zu der ersten Flanschbreite (W1, W1') höchstens 0,4 beträgt.

9. Fahrrad nach einem der vorstehenden Ansprüche, wobei das Verhältnis der ersten Flanschbreite (W1, W1') zu der ersten Flanschhöhe (H1, H1') mindestens 0,80 beträgt.

10. Fahrrad nach einem der vorstehenden Ansprüche, wobei das Verhältnis der ersten Flanschbreite (W1, W1') zu der ersten Flanschhöhe (H1, H1') mindestens 0,85 beträgt.

11. Fahrrad nach einem der vorstehenden Ansprüche, wobei das Verhältnis der ersten Flanschbreite (W1, W1') zu der ersten Flanschhöhe (H1, H1') etwa 0,91 beträgt.

12. Fahrrad nach einem der vorstehenden Ansprüche, wobei die erste Flanschbreite (W1, W1') etwa 5 mm beträgt und die erste Flanschhöhe (H1, H1') etwa 5,5 mm beträgt.

13. Fahrrad nach einem der vorstehenden Ansprüche, wobei der Hauptkörper einen radialen Hohlraumvorsprung definiert.

14. Fahrrad nach Anspruch 13, wobei der erste Flansch (110) einen radialen ersten Flanschvorsprung definiert und der zweite Flansch (115) einen zweiten radialen Flanschvorsprung definiert, wobei der radiale Hohlraumvorsprung den radialen ersten Flanschvorsprung und den zweiten radialen Flanschvorsprung nicht schneidet, wobei der erste radiale Flanschvorsprung von dem radialen Hohlraumvorsprung durch einen ersten Spalt (G1) beabstandet ist und der zweite radiale Flanschvorsprung von dem radialen Hohlraumvorsprung durch einen zweiten Spalt (G2) beabstandet ist, wobei der erste Spalt (G1) eine Breite einschließt, die mindestens 10 % der ersten Flanschbreite (W1) beträgt, und der zweite Spalt G2 eine Breite einschließt, die mindestens 10 % der zweiten Flanschbreite (W2) beträgt.

## Revendications

1. Bicyclette comprenant :
une roue (15, 20) supportant un cadre (25) de la bicyclette (10), la roue (15, 20) comprenant une jante (75, 75') conçue pour supporter un pneu (85),
dans laquelle la jante (75, 75') comporte :
un corps principal (100, 100') définissant un repos de talon (105, 105') ; et
un premier flasque de moyeu (110, 110') et un second flasque de moyeu (115, 115'), le premier flasque de moyeu (110, 110') et le second flasque de moyeu (115, 115') s'étendant sensiblement de manière radiale à partir du corps principal (100, 100') pour supporter le pneu (85) sur des côtés opposés d'un axe longitudinal (95, 95'), dans laquelle le premier flasque de moyeu (110, 110') a une première largeur de flasque de moyeu (W1, W1') s'étendant perpendiculairement à l'axe longitudinal (95, 95') et une première hauteur de flasque de moyeu (H1, H1') s'étendant à partir du repos de talon (105, 105') et parallèle à l'axe longitudinal (95, 95'), dans laquelle le second flasque de moyeu (115, 115') a une seconde largeur de flasque de moyeu (W2, W2'), dans laquelle un rapport entre la première largeur de flasque de moyeu (W1, W1') et la première hauteur de flasque de moyeu (H1, H1') est d'au moins 0,75, dans laquelle le premier flasque de moyeu (110, 110') et le second flasque de moyeu (115, 115') sont espacés l'un de l'autre d'un espacement de flasque de moyeu (FS), et dans laquelle un rapport de la première largeur de flasque de moyeu (W1, W1') à l'espacement de flasque de moyeu (FS) est d'au moins 0,14.

2. Bicyclette selon la revendication 1, dans laquelle le premier flasque de moyeu (110, 110') est l'un parmi un flasque de moyeu gauche ou un flasque de moyeu droit et le second flasque de moyeu (115, 115') est un autre parmi le flasque de moyeu gauche ou le flasque de moyeu droit.

3. Bicyclette selon la revendication 1 ou la revendication 2, dans laquelle le premier flasque de moyeu (110, 110') est sensiblement solide.

4. Bicyclette selon l'une quelconque des revendications précédentes, dans laquelle le rapport entre la première largeur de flasque de moyeu (W1, W1') et l'espacement de flasque de moyeu (FS) est d'au moins 0,15.

5. Bicyclette selon l'une quelconque des revendications précédentes, dans laquelle le rapport de la première largeur de flasque de moyeu (W1, W1') à l'espacement de flasque de moyeu (FS) est d'au moins 0,16.

6. Bicyclette selon l'une quelconque des revendications précédentes, dans laquelle la première largeur de flasque de moyeu (W1, W1') est d'environ 5 mm et l'espacement de flasque de moyeu (FS) est d'environ 30 mm.

7. Bicyclette selon l'une quelconque des revendications précédentes, dans laquelle le premier flasque de moyeu (110, 110') comporte une surface latérale interne (110a, 110a'), une surface de bord radiale (115b, 115b') et un coin interne arrondi ayant un rayon de coin interne et reliant la surface latérale interne (110a, 110a') à la surface de bord radiale (115b, 115b'), dans laquelle un rapport entre le rayon de coin interne et la première largeur de flasque de moyeu (W1, W1') est d'au plus 0,5.

8. Bicyclette selon la revendication 7, dans laquelle le rapport entre le rayon de coin intérieur et la première largeur de flasque de moyeu (W1, W1') est d'au plus 0,4.

9. Bicyclette selon l'une quelconque des revendications précédentes, dans laquelle le rapport entre la première largeur de flasque de moyeu (W1, W1') et la première hauteur de flasque de moyeu (H1, H1') est d'au moins 0,80.

10. Bicyclette selon l'une quelconque des revendications précédentes, dans laquelle le rapport entre la première largeur de flasque de moyeu (W1, W1') et la première hauteur de flasque de moyeu (H1, H1') est d'au moins 0,85.

11. Bicyclette selon l'une quelconque des revendications précédentes, dans laquelle le rapport entre la première largeur de flasque de moyeu (W1, W1') et la première hauteur de flasque de moyeu (H1, H1') est d'environ 0,91.

12. Bicyclette selon l'une quelconque des revendications précédentes, dans laquelle la première largeur de flasque de moyeu (W1, W1') est d'environ 5 mm et la première hauteur de flasque de moyeu (H1, H1') est d'environ 5,5 mm.

13. Bicyclette selon l'une quelconque des revendications précédentes, dans laquelle le corps principal définit une saillie de cavité radiale.

14. Bicyclette selon la revendication 13, dans laquelle le premier flasque de moyeu (110) définit une première saillie radiale de flasque de moyeu et le second flasque de moyeu (115) définit une seconde saillie radiale de flasque de moyeu, dans laquelle la saillie de cavité radiale ne coupe pas la première saillie radiale de flasque de moyeu et la seconde saillie radiale de flasque de moyeu, dans laquelle la première saillie radiale de flasque de moyeu est espacée de la saillie de cavité radiale par un premier espace (G1) et la seconde saillie radiale de flasque de moyeu est espacée de la saillie de cavité radiale par un second espace (G2), dans laquelle le premier espace (G1) comporte une largeur qui est au moins 10 % de la première largeur de flasque de moyeu (W1) et le second espace G2 comporte une largeur qui est au moins 10 % de la seconde largeur de flasque de moyeu (W2).
